# EUROPÄISCHE PATENTSCHRIFT

(11) **EP 2 390 606 B1**
(45) Veröffentlichungstag und Bekanntmachung des Hinweises auf die Patenterteilung: **08.05.2019**
(21) Anmeldenummer: 11004146.4
(22) Anmeldetag: 19.05.2011
(51) Int. Cl.: F26B 9/10, A01F 25/08, F26B 21/00

(54) **Heutrocknungssystem**
Hay drying system
Système de séchage de foin

(30) Priorität: 28.05.2010 DE 202010007362 U
(43) Veröffentlichungstag der Anmeldung: 30.11.2011
(73) Patentinhaber: LASCO Heutechnik GmbH, 5221 Lochen (AT)
(72) Erfinder: Landrichinger, Johann, 5221 Lochen (AT)
(74) Vertreter: Heyerhoff Geiger & Partner Patentanwälte PartGmbB

(56) Entgegenhaltungen:
- AT-U1- 5 600
- CH-A5- 669 709
- DE-A1- 3 011 188
- JP-A- H07 275 579
- SI-A- 22 846
- US-A- 2 590 416
- "INDUSTRIAL HOSE INDUSTRIAL HOSE CATALOGUE CATALOGUE", , 1. Januar 2008 (2008-01-01), Seiten 1-11, XP055198920, Gefunden im Internet: URL:http://www.alfagomma.com/altro/catzip/ INDUSTRIAL_HOSES_999999_6_INGLESE.pdf [gefunden am 2015-06-29]

## Beschreibung

Die Erfindung betrifft ein Heutrocknungssystem mit einem Gebläse und einem Luftführungssystem zur Zuleitung von Luft aus dem Gebläse zu mehreren Heuballen, mit einem Einblasende, das an einem Luftauslass des Gebläses befestigt ist, und zumindest einem Ausblasende zur Platzierung in einem Heuballen, wobei das Ausblasende durch einen zweiseitig offenen Verteilerring gebildet ist, der Luft aus dem Gebläse in zwei relativ zum Verteilerring gegenüber angeordnete Heuballen leitet.

Heu zur Verfütterung an Vieh wird - je nach Witterung - nach einem Schnitt nicht immer vollkommen trocken vom Feld in die Scheune gebracht, sondern enthält hin und wieder eine Restfeuchte, die zu hoch ist, um ein Schimmeln während einer Einlagerung zu verhindern. Entsprechend wird das Heu entweder lose in der Scheune durch einen Lüftungsboden oder gepresst in Rundballen mit einem Heutrocknungssystem getrocknet. Hierbei wird Luft, die unter Umständen vorgewärmt sein kann, durch das Heu geblasen und nimmt Feuchtigkeit aus dem Heu mit, bis das Heu einen ausreichenden Trocknungsgrad hat.

Zum Trocknen von gepressten Rundballen ist es bekannt, diese jeweils auf eine Luftöffnung einer Heutrocknungsanlage zu stellen, wobei die Luftöffnung über ein Rohrsystem mit einem Gebläse verbunden ist, das mehrere Luftöffnungen mit verdichteter Luft versorgt.

Aus der AT 005 600 U1 ist ein Heutrocknungssystem mit einem Kanalsystem aus mehreren gleichen Kanalelementen bekannt, mit denen ein modularer Aufbau eines Luftkanalsystems kostengünstig möglich ist.

Die US 2590416 beschreibt eine effiziente Vorrichtung zum Trocknen von großen Mengen von Heu mit einem Hauptschacht und mehreren lateral von diesem abzweigenden Seitenschächten zur Anordnung auf dem Boden einer Scheune.

Eine Anordnung zum tiefen Einbringen von Trocknungsluft in Heuballen ist aus der CH 669709 A5 bekannt.

Es ist eine Aufgabe der vorliegenden Erfindung, ein Heutrocknungssystem anzugeben, das einfach, zuverlässig und mit einem geringen Kostenaufwand betreibbar ist.

Diese Aufgabe wird durch ein Heutrocknungssystem der eingangs genannten Art gelöst, bei dem erfindungsgemäß das Luftführungssystem eine Luftschlauchanordnung aufweist, die aus zumindest einem in der Länge einfaltbaren und in seinem Volumen aufblasbaren Luftschlauch besteht, und die zumindest 70% der Luftführungsstrecke vom Einblasende zum Ausblasende bildet, wobei die Luftschlauchanordnung einen Hauptschlauch und mehrere von diesem abzweigende und im Querschnitt kleinere Nebenschläuche aufweist, die in ihrer Konstruktion gleich sind wie der Hauptschlauch, jeweils an einer von mehreren Abzweigungen des Hauptschlauchs angeschossen sind und jeweils an einem der Verteilerringe angeschlossen sind.

Die Erfindung geht von der Überlegung aus, dass eine Heutrocknungsanlage kostengünstig einsetzbar ist, wenn sie mobil verwendet werden kann. Hierfür ist ein mobiles Luftführungssystem zur Zuleitung von Luft aus dem Gebläse zu einer Heuballengruppe notwendig. Ein Transport und eine Lagerung sowie ein Aufbau eines solchen Luftführungssystems sind einfach möglich, wenn das Luftführungssystem eine Luftschlauchanordnung aufweist, sodass auf die üblichen starren metallischen Rohre verzichtet werden kann. Ein Luftschlauch ist vom Gewicht her leichter als ein metallisches Rohr und kann wegen seiner Flexibilität leicht verlegt und angeschlossen werden. Durch die Einfaltbarkeit kann der Luftschlauch außerdem Platz sparend gelagert werden. Weiter ist ein einfaltbarer Luftschlauch vom Gewicht und Volumen einfach zu transportieren. Die Luftschlauchanordnung besteht vorteilhafterweise ausschließlich aus einem oder mehreren in der Länge einfaltbaren und in ihrem Volumen aufblasbaren Luftschläuchen. Ein Luftschlauch ist zweckmäßigerweise in der Weise flexibel, dass er in der Länge einfaltbar bzw. zusammenschiebbar ist, insbesondere auf unter 20% seiner ausgezogenen Länge. Das die Hülle bildende Material des Luftschlauchs ist ohne Materialschaden und insbesondere ohne eine Materialdehnung faltbar. Es kann ein flexibles, planenartiges Material sein. Der Luftschlauch ist im Volumen aufblasbar, ist also bei einem Aufblasen durch Formänderung und ohne Materialdehnung vergrößerbar. Die Heuballen können Ballen in jeder Form sein und beinhalten gepresstes Heu. Zweckmäßigerweise sind die Heuballen Rundballen mit einem Durchmesser von zumindest 1,1 m und einer flach liegenden Höhe von zumindest 0,8 m.

Der Luftschlauch kann aus einem Planenmaterial aus einem Kunststoff gefertigt sein, wobei das Planenmaterial ein durchgehendes und einheitliches Material ist. Vorteilhafterweise umfasst der Luftschlauch jedoch einen mit Kunststoff beschichteten Gewebeschlauch. Das eine Stabilität und Reißfestigkeit bildende Material des Luftschlauchs ist somit aus einem Gewebe oder Geflecht gebildet, das mit einem Kunststoff zumindest einseitig beschichtet ist, sodass eine Luftundurchlässigkeit vorliegt.

Um ein Einfallen des Luftschlauchs und ein unerwünschtes Abknicken zu verhindern, ist der Luftschlauch zweckmäßigerweise mit einer Ringkonstruktion versehen, die seinen Querschnitt vielfach umläuft und ihn gegen ein Einfallen in seinen Querschnitt hinein schützt. Durch die Ringkonstruktion wird der Querschnitt der Hülle bei gestrecktem Luftschlauch offen gehalten. Die Ringkonstruktion kann eine Konstruktion aus vielen einzelnen Ringen sein, die in ihrer Gesamtheit den Querschnitt vielfach umlaufen. Zweckmäßigerweise ist die Ringkonstruktion eine Spiral- bzw. Wendelkonstruktion mit einer Spirale bzw. Wendel, die den Querschnitt des Luftschlauchs vielfach und spiralartig umläuft. Die Ringe oder die Spirale kann aus Metall bestehen, wobei eben so gut ein Material aus Kohlefaser denkbar ist.

Vorteilhafterweise ist die Ringkonstruktion nach außen hin durch ein Scheuerschatzmittel umgeben, cas streifenförmig den Luftschlauch in Bereich der Ringkonstruktion umläuft und zweckmäßigerweise ein radial am weitesten, außen liegendes Segment des Luftschlauchs nach außen abdeckt. Auf diese weise ist der Luftschlauch bei einem Aufliegen auf einem Boden durch das Scheuerschutzmittel gegen ein Abscheuern geschützt, sodass eine hohe Stabilität gegen eine Beschädigung bei einem Hin- und Herrutschen auf beispielsweise einen Pflasterboden gewährleistet ist.

Das Scheuerschutzmittel ist zweckmäßigerweise dergestalt ausgeführt, dass der Luftschlauch in einem gestreckten Zustand ausschließlich auf dem Scheuerschutzmittel auf dem 3oden aufliegt, insbesondere auch bei einem Abrollen des Luftschlauchs um 360° um seine Längsachse. Vorteilhafterweise bedeckt das Scheuerschutzmittel maximal 20% der Außenfläche des Luftschlauchs, sodass die übliche Fläche aus Materialeinsparungsgründen frei bleiben kann.

Zum gleichzeitigen Trocknen von mehreren Heuballen weist die Luftschlauchanordnung einen Hauptschlauch und mehrere von diesem abzweigende und im Querschnitt kleinere Nebenschläuche auf, die in ihrer Konstruktion insbesondere gleich sind wie der Hauptschlauch. Hierzu umfasst der Hauptschlauch mehrere Abzweigungen, an die jeweils ein Nebenschlauch angeschlossen ist. Die Abzweigungen können in einer Reihe parallel zur Längsachse des Hauptschlauchs verlaufen, wobei auch zwei um 180° gegenüber liegende Reihen vorteilhaft sind, um beidseitig des Hauptschlauchs Nebenschläuche ansetzen zu können.

Der Durchmesser des Hauptschlauchs ist zweckmäßigerweise abhängig von der Anzahl der Abzweigungen, die er aufweist. Zur Trocknung von 14 Heuballen ist ein Durchmesser von 60 cm bis 80 cm vorteilhaft, zur Trocknung von 30 Heuballen hat sich ein Durchmesser von 100 cm bis 120 cm als effizient erwiesen. Wenn der Hauptschlauch einen Durchmesser aufweist, der der Höhe eines quer liegenden Rundballens entspricht, insbesondere 1,1 m ± 20%, kann ein abzweigender Nebenschlauch in einem Knick verhindernden Radius über den Hauptschlauch gelegt und waagerecht zur Oberkante eines flach liegenden Heuballens geführt werden, wobei diese Höhe ideal ist, um Luft zwischen zwei übereinander liegende Heuballen zu führen.

Weiter wird vorgeschlagen, dass die Nebenschläuche und der Hauptschlauch jeweils mit einer Steckverbindung unmittelbar miteinander verbunden sind. Hierdurch können die Nebenschläuche einfach und schnell mit dem Hauptschlauch verbunden werden. In gleicher Weise können auch mehrere Hauptschlauchelemente miteinander verbunden werden, sodass der Hauptschlauch aus mehreren Elementen besteht, durch die sich die Länge des Hauptschlauchs verlängern lässt.

Eine einfache Steckverbindung ist erreichbar, wenn die Luftschlauchanordnung zumindest zwei ineinander gesteckte Luftschläuche aufweist, deren zum jeweils anderen Luftschlauch weisendes Ende jeweils mit einem den Schlauchquerschnitt offen haltenden Ring verstärkt ist, wobei der Ring eines der Luftschläuche durch den Ring des anderen Luftschlauchs gesteckt ist.

Vorteilhafterweise sind die beiden Ringe gleich groß und insbesondere in der Weise flexibel, dass der eine Ring ein Stück weit verformt und in den anderen Ring eingeschoben werden kann und sich nach dem Durchschieben wieder in seinen kreisförmigen Zustand entspannt. Auf diese Weise verhaken die beiden ineinander gesteckten Ringe hintereinander und halten so die Steckverbindung fest, sodass ein Herausrutschen des eingesteckten Luftschlauchs aus der Abzweigung verhindert wird.

Ein unerwünschtes Auseinandergehen der Steckverbindung kann verhindert werden, wenn eine Schlauchüberlappung der beiden Luftschläuche zwischen den beiden Ringen mit einem Einschnürmittel soweit eingeschnürt ist, dass der eingesteckte Ring die Verbindung der beiden Luftschläuche haltend hinter das Einschnürmittel geklemmt ist. Das Einschnürmittel kann ein Gurt sein, beispielsweise mit einem Schnellverschluss oder einem Ratschenverschluss, der um die beiden Luftschläuche im Bereich der Schlauchüberlappung gelegt werden kann und durch Zusammenziehen die Einschnürung bewirkt.

Zum gleichzeitigen Trocknen zweier Rundballen mit Luft aus einem einzigen Nebenschlauch ist am Auslassende ein zweiseitig offener Verteilerring befestigt, der Luft aus dem Gebläse in zwei relativ zum Verteilerring gegenüber angeordnete Rundballen leitet. Der Verteilerring kann aus einem starren Material gebildet sein, insbesondere Metall. Er kann zwei Auslassöffnungen bilden, die insbesondere zueinander entgegengesetzt ausgerichtet sind, sodass die Luft nach unten in einen ersten Rundballen und durch die andere Auslassöffnung in einen auf den ersten Rundballen gestellten zweiten Rundballen einblasbar ist. Zusammen mit einer Einlassöffnung kann der Verteilerring so drei Öffnungen umfassen, wobei die Einlassöffnung relativ zu den beiden Auslassöffnungen jeweils senkrecht angeordnet sein kann. Die Richtung der Öffnungen kann hierbei die Einblas- bzw. Ausblasrichtung sein bzw. die Normalenrichtung der Fläche eines ebenen Deckels, der die entsprechende Öffnung verschließen würde. Soll nur ein Heuballen an einem Verteilerring getrocknet werden, so kann die zweite Auslassöffnung durch einen Deckel verschlossen werden.

Weiter ist es vorteilhaft, wenn der Verteilerring zu beiden Seiten einen formfesten und eine Luftdichtung zwischen Verteilerring und Rundballen bewirkenden Kragen aufweist, der sich in einen Rundballen einpresst und ein zumindest 5 cm langes Rohr in den Rundballen hineinformt. Einem unerwünschten Entweichen von Luft frühzeitig aus dem Heuballen kann entgegengewirkt werden, sodass der Trocknungsvorgang effektiv bleibt.

Das Einpressen des Kragens in den Heuballen geschieht, wenn der Rundballen auf den Kragen aufgelegt wird durch das Eigengewicht des Rundballens bzw. durch das Gewicht eines Rundballens, der den Verteilerring nach unten in einen darunter liegenden Rundballen eindrückt. Durch das zumindest 5 cm lange Rohr kann die eingeblasene Luft ein Stück weit in den Rundballen hineingeführt werden.

Bei einem Verwenden des Heutrocknungssystems auf einem ungepflasterten oder besonders schmutzigen Boden ist es vorteilhaft, wenn der Luftschlauch nicht unmittelbar auf dem Boden liegt, sondern schwebend über dem Boden aufgehängt betrieben wird. Dies kann erreicht werden, wenn das Luftführungssystem ein Aufhängesystem mit mehreren Aufhängeelementen enthält, die regelmäßig voneinander beabstandet sind zur hängenden Halterung des Luftschlauchs an einer waagerechten Tragekonstruktion.

Die Aufhängeelemente sind zweckmäßigerweise in einer Reihe angeordnet, die parallel zur Längsachse des Luftschlauchs verläuft. Vorteilhaft sind mehrere parallele Reihen von Aufhängeelementen parallel zur Längsachse, wobei die Reihen insbesondere um 90° zueinander um den Luftschlauch versetzt sind, sodass der Luftschlauch in vier verschiedenen Drehpositionen aufgehängt werden kann. Hierdurch kann eine Reihe von Abzweigungen in einem Hauptschlauch nach oben, unten, rechts oder links angeordnet werden, je nachdem, wo er relativ zu den Heuballen zu liegen kommt und in welche Richtung die Nebenschläuche abzweigen sollen.

Zweckmäßigerweise sind die Aufhängeelemente jeweils am Scheuerschutzmittel befestigt, wodurch eine besonders stabile Konstruktion des Aufhängesystems erreicht werden kann.

Außerdem ist die Erfindung gerichtet auf ein wie oben beschriebenes Heutrocknungssystem mit zumindest einem Heuballen, bei dem das Ausblasende im Heuballen angeordnet ist.

Weiter betrifft die Erfindung ein Verfahren zum Trocknen von Heuballen mittels eines insbesondere wie oben beschriebenen Heutrocknungssystems auf eine Restfeuchte von zweckmäßigerweise unter 20%, bei dem Luft, vorteilhafterweise durch eine Flamme erwärmte Luft, aus einem Gebläse durch ein Luftführungssystem zu den Heuballen geblasen wird, wobei das Luftführungssystem eine Luftschlauchanordnung aufweist, die aus zumindest einem in der Länge einfaltbaren und in seinem Volumen aufblasbaren Luftschlauch besteht, und die zumindest 70% der Luftführungsstrecke vom Gebläse zu einem Heuballen bildet.

Bei einem Aufblasen der Luftschlauchanordnung in ihrem Volumen durch die Gebläseluft können Einknickungen, die den Luftstrom behindern, beseitigt werden, sodass der Luftstrom widerstandsarm zu den Heuballen geführt wird. Das Aufblasen beträgt zweckmäßigerweise zumindest 10% des Volumens der auseinander gefalteten und unaufgeblasenen Luftschlauchanordnung.

Die Erfindung wird anhand von Ausführungsbeispielen näher erläutert, die in den Zeichnungen dargestellt sind.

Es zeigen:
- Fig. 1: ein Heutrocknungssystem mit einem Gebläse und einem Luftzuführungssystem mit einem Hauptschlauch und fünf Nebenschläuchen in einer perspektivischen Übersicht,
- Fig. 2: einen Teil eines Nebenschlauchs mit einem Verteilerring zwischen zwei Heuballen,
- Fig. 3: einen Ausschnitt eines Hauptschlauchs, über den drei Nebenschläuche gelegt und jeweils zu Heuballen geführt sind und
- Fig. 4: einen Luftschlauch, der an mehreren Aufhängeelementen an einer metallischen Stange aufgehängt ist.

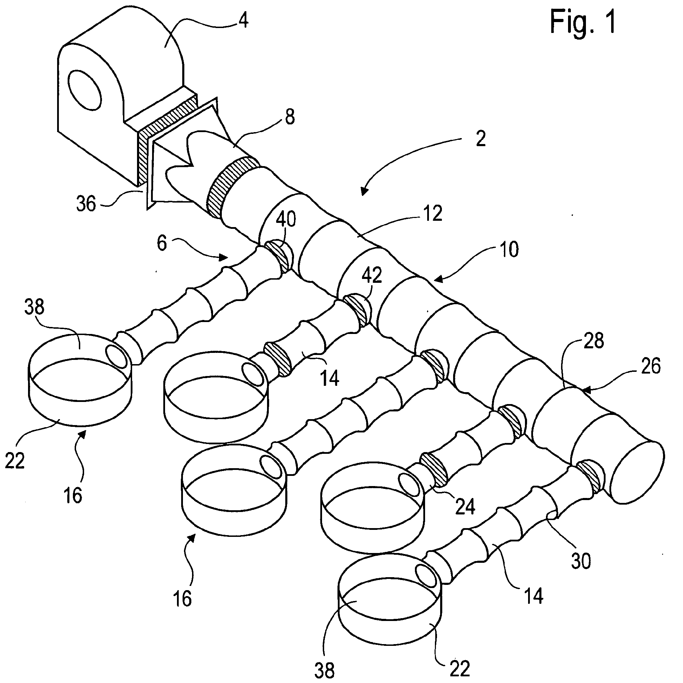

Fig. 1 zeigt ein Heutrocknungssystem 2 mit einem Gebläse 4 und einem Luftführungssystem 6. Das Gebläse 4 kann ein reines Gebläse sein oder Teil eines Warmluftofens, in dem Luft erwärmt und dann durch das Gebläse in das Luftführungssystem 6 eingeblasen wird. Das Luftführungssystem 6 besteht aus einem metallischen Anschlussstück 8, einer Luftschlauchanordnung 10 und Verteilerringen 16 zum Verteilen von Luft in jeweils zwei Heuballen 18. Die Luftschlauchanordnung 10 besteht aus einem Luftschlauch 12, der als Hauptschlauch ausgeführt ist, und weiteren Luftschläuchen 14, die jeweils einen Nebenschlauch bilden. Jeder Nebenschlauch 14 ist an einen Verteilerring 16 angeschlossen. Die Nebenschläuche 14 sind in zwei verschiedenen Längen vorhanden, wobei lange und kurze Nebenschläuche 14 jeweils alternierend angeordnet sind, sodass die zu trocknenden Heuballen 18 versetzt und somit eng zusammen gestellt werden können.

Das Luftführungssystem 6 ist in einer Art Explosionszeichnung dargestellt, bei dem das Gebläse 4, das Anschlussstück 8, der Hauptschlauch 12 und die Nebenschläuche 14 unverbunden und nebeneinander dargestellt sind, wobei ein Blick in das Innere des Luftführungssystems 6 in Fig. 1 durch eine Schraffur angedeutet ist. Drei der Verteilerringe 16 sind mit jeweils einem Nebenschlauch 14 verbunden dargestellt und zwei weitere der Verteilerringe 16 sind in Form der Explosionszeichnung von ihrem Nebenschlauch 14 getrennt gezeichnet.

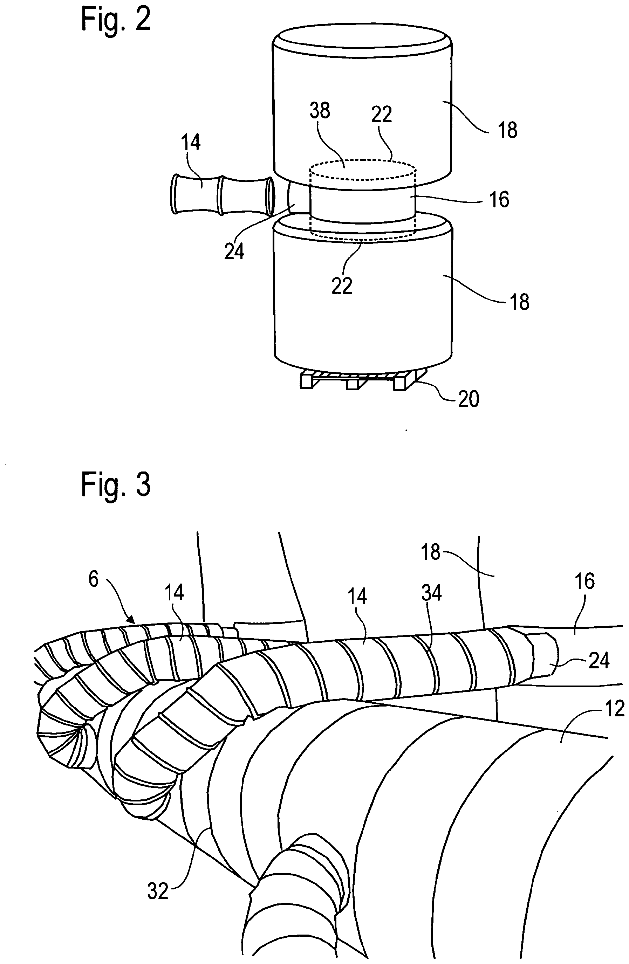

Zu trocknende Heuballen 18 sind in Fig. 2 schematisch dargestellt. Ein unterer Heuballen 18 wird durch einen Abstandhalter 20, beispielsweise eine Palette, von einem Boden, auf dem der Abstandhalter liegt, beabstandet abgestellt. Darauf wird ein Verteilerring 16 gelegt und auf diesen ein weiterer Heuballen 18. Durch das Gewicht des oberen Heuballens 18 wird der Verteilerring 16 mit einem oberen Kragen 22 von unten in den oberen Heuballen 18 und mit einem unteren Kragen 22 von oben in den unteren Heuballen 18 eingedrückt, und zwar um etwa 10 cm.

Anschließend wird ein als Nebenschlauch ausgeführter Luftschlauch 14 um einen Stutzen 24 des Verteilerrings 16 gelegt. Der Stutzen 24 weist einen Wulst auf, über den der Nebenschlauch 14 gezogen wird. Hinter dem Wulst wird der Nebenschlauch 14 beispielsweise mit Hilfe eines nicht dargestellten Gurts, der von außen um den Luftschlauch 14 und den Stutzen 24 gelegt und anschließend gespannt wird, befestigt. Nach einem Verbinden der Nebenschläuche 14 mit dem Hauptschlauch 12, dem Hauptschlauch 12 mit dem Anschlussstück 8 und dem Anschlussstück 8 mit dem Gebläse 4 wird Luft vom Gebläse 4 durch das Anschlussstück 8 in das Luftführungssystem 6 eingeblasen und gelangt durch die Verteilerringe 16 in jeweils zwei Heuballen 18 und durchströmt diese, sodass Feuchtigkeit aus dem Inneren der Heuballen 18 abgeführt wird und das Heu trocknet.

Die Luftschläuche 12, 14 sind aus einem planenartigen, flexiblen und faltbaren Material gefertigt. Das planenartige Material ist ohne Materialdehnung durch ein Einblasen von Luft - oder natürlich auch manuell durch ein in die Länge Ziehen eines Luftschlauchs 12, 14 - entfaltbar und so vergrößerbar. Das Material ist ein Gewebe, das beidseitig mit Kunststoff überzogen oder in Kunststoff getränkt wurde, zum Beispiel ein Polyamidgewebe, das mit PVC beschichtet ist. Durch die planenartige Gestalt sind die Luftschläuche 12, 14 in ihrer Länge variabel, einfaltbar, flexibel und in Radien führbar, sodass das Luftführungssystem 6 in eine nahezu beliebige Form gebracht werden kann.

Um ein Einfallen der Luftschläuche 12, 14 zu verhindern, ist um jeden Luftschlauch 12, 14 eine Ringkonstruktion 26 gelegt, die aus einer Vielzahl von Ringen 28, 30 besteht, wie in Fig. 1 dargestellt ist. Alternativ kann die Ringkonstruktion 26 einen Wendelring 32, 34 enthalten, wie in Fig. 3 dargestellt ist, wobei jeweils ein Wendelring 32 oder 34 einen Luftschlauch 12 bzw. 14 wendelförmig umläuft. Mit Hilfe der Spiralkonstruktion mit dem Wendelring 32, 34 kann ein Abknicken des Luftschlauchs 12, 14 verhindert werden, sodass einem Luftstau entgegengewirkt wird.

Die Ringe 28, 30 bzw. Wendelringe 32, 34 sind aus einem Material gefertigt, das das Zusammenfallen des Luftschlauchs 12, 14 im Bereich des Rings 28, 30 bzw. Wendelrings 32, 34 verhindert, wobei die Flexibilität der Wendelringe 32, 34 so hoch ist, dass die Luftschläuche 12, 14 abgeknickt werden können oder mit ihrer Innenseite in einem unendlich kleinen Radius geführt werden können, wie beispielsweise in Fig. 3 bei dem mittleren Nebenschlauch 14 dargestellt ist.

Luft aus dem Gebläse 4 kann somit von einem Einblasende 36 des Luftführungssystems 6 bis zu den mehreren Ausblasenden 38 in den Verteilerringen 16 mit einem geringen Luftwiderstand geführt werden, sodass eine geringe Luftdruckdifferenz zwischen Gebläse 4 und Ausblasenden 38 ausreicht, um einen starken und druckstabilen Luftstrom innerhalb des Luftführungssystems 6 zu erzeugen. Durch die flexible Luftschlauchanordnung 10 wird etwa 90% der Luftführungsstrecke vom Einblasende 36 zum am weitesten entfernten Ausblasende 38 an einem Verteilerring 16 gebildet.

Bei dem in Fig. 3 dargestellten Luftführungssystem 6 ist der als Hauptschlauch ausgeführte Luftschlauch 12 im Durchmesser so groß ausgeführt, wie der liegende Rundballen 18 hoch ist, nämlich 1,20 m. Die um den Hauptschlauch 12 und über diesen hinweg geführten Nebenschläuche 14 können somit waagerecht zu den Verteilerringen 16 geführt werden, sodass eine strömungswiderstandsarme Konstruktion erreicht wird.

Zum Verbinden der Nebenschläuche 14 mit dem Hauptschlauch 12 sind die Nebenschläuche 14 an beiden Enden jeweils mit einem Ring 30 ausgestattet. Bei der in Fig. 3 gezeigten Konstruktion kann der Wendelring 34 an beiden Enden der Nebenschläuche 14 jeweils ringförmig zusammenlaufen. Der Ring 30 ist im Durchmesser so bemessen wie ein Ring 40, der einen Ausblasstutzen 42 aus Planenmaterial am Hauptschlauch 12 abschließt. Alternativ kann der letzte Ring 30 an einem Schlauchende des Nebenschlauchs 14 kleiner als der vorletzte Ring 30 sein, sodass der Nebenschlauch 14 sich zum Schlauchende verjüngt. Hierbei ist zweckmäßigerweise wiederum der letzte Ring 30 in seinem Durchmesser so bemessen, wie der Ring 40, um eine sichere Steckverbindung zu erreichen.

Der Ring 30 kann mit der Hand ein Stück weit zu einem Oval verformt werden und durch den Ring 40 eingeschoben werden, sodass er hinter dem Ring 40 im entspannten Zustand verklemmt. Hierdurch wird ein Herausrutschen des Rings 30 aus dem Ring 40 und damit ein Lösen des Nebenschlauchs 14 aus dem Ausblasstutzen 42 verhindert. Ebenso gut kann der Ring 40 in den Ring 30 eingesteckt werden.

Eine zusätzliche Sicherheit wird erreicht, wenn um das nunmehr ineinander liegende Planenmaterial von Luftschlauch 14 und Ausblasstutzen 42 zwischen dem innen liegenden Ring 30 oder 40 und dem außen liegenden Ring 40 oder 30 ein Gurt gelegt und ein Stück weit zusammengezogen wird, sodass der Radius des Gurts kleiner ist als der Außendurchmesser des eingeschobenen Rings 30 oder 40, sodass dieser nicht durch den Gurt gezogen werden kann.

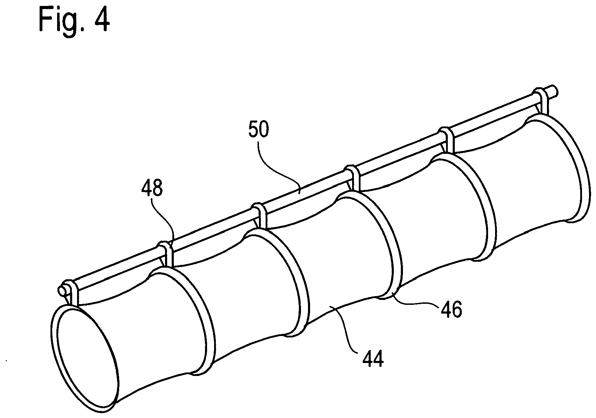

Fig. 4 zeigt einen weiteren Luftschlauch 44 in Form eines Hauptschlauchs oder Nebenschlauchs, dessen nicht sichtbare Ringe um das planenartige Material des Luftschlauchs 44 mit einem Scheuerschutzmittel 46 umgeben sind. Dieses ist in Form eines gurtartigen Gewebes ausgeführt, das etwa 10% der Außenfläche des Luftschlauchs 44 umgibt, und zwar an denjenigen Stellen, an denen der Luftschlauch 44 in ausgestrecktem Zustand auf einem Boden aufliegen würde.

Zum zusätzlichen Schutz des Luftschlauchs 44 ist er mit mehreren Aufhängeelementen 48 versehen, die schlaufenartig ausgeführt und am Scheuerschutzmittel 46 befestigt sind. Durch die Aufhängeelemente 48 kann eine Stange 50 geschoben werden, an der der Luftschlauch 44 frei schwebend über dem Boden aufgehängt werden kann, sodass ein Durchscheuern des Luftschlauchs 44 bei Bewegungen desselben verhindert wird. Anstelle einer Stange 50 kann ein Seil verwendet werden, das durch die Aufhängeelemente 48 gezogen wird und an dem der Luftschlauch 44 hängt.

Das Scheuerschutzmittel 46 und/oder die Aufhängeelemente 48 sind auch an den in Fig. 1 und Fig. 3 gezeigten Luftschläuchen 12, 14 sinnvoll und können dort eingesetzt werden.

### Bezugszeichenliste

- 2: Heutrocknungssystem
- 4: Gebläse
- 6: Luftführungssystem
- 8: Anschlussstück
- 10: Luftschlauchanordnung
- 12: Luftschlauch
- 14: Luftschlauch
- 16: Verteilerring
- 18: Heuballen
- 20: Abstandhalter
- 22: Kragen
- 24: Stutzen
- 26: Ringkonstruktion
- 28: Ring
- 30: Ring
- 32: Wendelring
- 34: Wendelring
- 36: Einblasende
- 38: Ausblasende
- 40: Ring
- 42: Ausblasstutzen
- 44: Luftschlauch
- 46: Scheuerschutzmittel
- 48: Aufhängeelement
- 50: Stange

## Patentansprüche

1. Heutrocknungssystem (2) mit einem Gebläse (4) und einem Luftführungssystem (6) zur Zuleitung von Luft aus dem Gebläse (4) zu mehreren Heuballen (18), mit einem Einblasende (36),
das an einem Luftauslass des Gebläses (4) befestigt ist, und zumindest einem Ausblasende (38) zur Platzierung in einem Heuballen (18), wobei das Ausblasende (38) durch einen zweiseitig offenen Verteilerring (16) gebildet ist, der Luft aus dem Gebläse (4) in zwei relativ zum Verteilerring (16) gegenüber angeordnete Heuballen (18) leitet,
**dadurch gekennzeichnet, dass** das Luftführungssystem (6) eine Luftschlauchanordnung (10) aufweist, die aus zumindest einem in der Länge einfaltbaren und in seinem Volumen aufblasbaren Luftschlauch (12, 14, 44) besteht, und die zumindest 70% der Luftführungsstrecke vom Einblasende (36) zum Ausblasende (38) bildet, wobei die Luftschlauchanordnung (10) einen Hauptschlauch (12) und mehrere von diesem abzweigende und im Querschnitt kleinere Nebenschläuche (14) aufweist, die in ihrer Konstruktion gleich sind wie der Hauptschlauch (12), jeweils an einer von mehreren Abzweigungen des Hauptschlauchs (12) angeschossen sind und jeweils an einem der Verteilerringe (16) angeschlossen sind.

2. Heutrocknungssystem (2) nach Anspruch 1,
**dadurch gekennzeichnet, dass** der Luftschlauch (12, 14, 44) ein mit Kunststoff beschichteter Gewebeschlauch ist.

3. Heutrocknungssystem (2) nach Anspruch 1 oder 2,
**dadurch gekennzeichnet, dass** der Luftschlauch (12, 14, 44) eine gegen ein Einfallen in seinen Querschnitt stabile Ringkonstruktion (26) aufweist, die seinen Querschnitt vielfach umläuft.

4. Heutrocknungssystem (2) nach Anspruch 3,
**dadurch gekennzeichnet, dass** die Ringkonstruktion (26) eine Wendelkonstruktion ist.

5. Heutrocknungssystem (2) nach Anspruch 3 oder 4,
**dadurch gekennzeichnet, dass** die Ringkonstruktion (26) nach außen hin durch ein Scheuerschutzmittel (46) umgeben ist, das streifenförmig den Luftschlauch (44) im Bereich der Ringkonstruktion (26) umläuft und ein radial am weitesten außen liegendes Segment des Luftschlauchs (44) nach außen abdeckt.

6. Heutrocknungssystem (2) nach einem der vorhergehenden AnSprüche,
**dadurch gekennzeichnet, dass** der Hauptschlauch (12) einen Durchmesser aufweist, der der Höhe, eines quer liegenden Heuballens (18) entspricht.

7. Heutrocknungssystem (2) nach einem der vorhergehenden Ansprüche,
**dadurch gekennzeichnet, dass** die Nebenschläuche (14) und der Hauptschlauch (12) jeweils mit einer Steckverbindung unmittelbar mitainander verbunden sind.

8. Heutrocknungssystem (2) nach einem der vorhergehenden Ansprüche,
**dadurch gekennzeichnet, dass** die Luftschlauchanordnung (10) zumindest zwei ineinander gesteckte Luftschläuche (12, 14) aufweist, deren zum jeweils anderen Luftschlauch (12, 14) weisendes Ende jeweils mit einem den Schlauchquerschnitt offen haltenden Ring (30, 40) verstärkt ist, wobei der Ring (30, 40) eines der Luftschläuche (12, 14) durch den Ring (40, 30) des anderen Luftschlauchs (14, 12) gesteckt ist.

9. Heutrocknungssystem (2) nach Anspruch 8,
**dadurch gekennzeichnet, dass** eine Schlauchüberlappung der beiden Luftschläuche (12, 14) zwischen den beiden Ringen (30, 40) mit einem Einschnürmittel so weit eingeschnürt ist, dass der eingesteckte Ring (30 ,40) die Verbindung der beiden Luftschläuche (12, 14) haltend hinter das Einschnürmittel geklemmt ist.

10. Heutrocknungssystem (2) nach einem der vorhergehenden Ansprüche,
**dadurch gekennzeichnet, dass** der Verteilerring (16) zu beiden Seiten einen formfesten und eine Luftdichtung zwischen Verteilerring (16) und Heuballen (18) bewirkenden Kragen (22) aufweist, der sich in einen Heuballen (18) einpresst und ein zumindest 5 cm langes Rohr in den Heuballen (18) hinein formt.

11. Heutrocknungssystem (2) nach einem der vorhergehenden Ansprüche,
**dadurch gekennzeichnet, dass** das Luftführungssystem (6) ein Aufhängesystem mit mehreren Aufhängeelementen (48) enthält, die regelmäßig voneinander beabstandet sind zur hängenden Halterung des Luftschlauchs (44) an einer waagerechten Tragekonstruktion.

12. Verfahren zum Trocknen von Heuballen (18) mittels eines Heutrocknungssystems (2) auf eine Restfeuchte von unter 20%, bei dem durch einen Verbrennungsofen erwärmte Luft mittels eines Gebläses (4) durch ein Luftführungssystem (6) zu den Heuballen (18) geblasen wird, wobei die Luft durch ein Ausblasende (38) in Form eines zweiseitig offenen Verteilerrings (16) geführt ist, der Luft aus dem Gebläse (4) in zwei relativ zum Verteilerring (16) gegenüber angeordnete Heuballen (18) leitet,
**dadurch gekennzeichnet, dass** das Luftführungssystem (6) eine Luftschlauchanordnung (10) aufweist, die aus zumindest einem in der Länge einfaltbaren und in seinem Volumen aufblasbaren Luftschlauch (12, 14, 44) besteht, und die zumindest 70% der Luftführungsstrecke vom Gebläse (4) zu einem Heuballen (18) bildet, wobei Luft die durch einen Hauptschlauch (12) und mehrere von diesem abzweigende und im Querschnitt kleinere Nebenschläuche (14) der Luftschlauchanordnung (10) geführt
wird, die in ihrer Konstruktion gleich sind wie der Hauptschlauch (12), jeweils an einer von mehreren Abzweigungen des Hauptschlauchs (12) angeschossen sind und jeweils an einem der Verteilerringe (16) angeschlossen sind.

13. Verfahren nach Anspruch 12,
**dadurch gekennzeichnet, dass** die Luftschlauchanordnung (10) in der Länge eingefaltet ist und zur Montage am Geblase (4) und in den Heuballen (18) auseinandergefaltet und durch die Gebläseluft in ihrem Volumen aufgeblasen wird.

## Claims

1. Hay-drying system (2) having a blower (4) and having an air-guiding system (6) for feeding air from the blower (4) to multiple hay bales (18), having a blowing-in end (36) which is fastened to an air outlet of the blower (4), and having at least one blowing-out end (38) for placement in a hay bale (18), wherein the blowing-out end (38) is formed by a distributor ring (16) which is open on two sides and which guides air from the blower (4) into two hay bales (18) which are oppositely arranged relative to the distributor ring (16), **characterized in that** the air-guiding system (6) has an air hose arrangement (10) which consists of at least one air hose (12, 14, 44), said air hose being able to be folded in lengthwise and being able to be inflated in terms of its volume, and which forms at least 70% of the air-guiding path from the blowing-in end (36) to the blowing-out end (38), wherein the air hose arrangement (10) has a main hose (12) and has multiple secondary hoses (14) which branch off therefrom and are smaller in cross section, which are identical to the main hose (12) in terms of their construction, are in each case connected to one of multiple branches of the main hose (12) and are in each case connected to one of the distributor rings (16).

2. Hay-drying system (2) according to Claim 1, **characterized in that** the air hose (12, 14, 44) is a fabric hose coated with plastic.

3. Hay-drying system (2) according to Claim 1 or 2, **characterized in that** the air hose (12, 14, 44) has a ring construction (26) which is stable with respect to a collapse in the cross section thereof and which encircles the cross section thereof many times.

4. Hay-drying system (2) according to Claim 3, **characterized in that** the ring construction (26) is a spiral construction.

5. Hay-drying system (2) according to Claim 3 or 4, **characterized in that**, towards the outside, the ring construction (26) is surrounded by an abrasion protection means (46) which encircles the air hose (44) in a strip-like manner in the region of the ring construction (26) and outwardly covers a radially outermost segment of the air hose (44).

6. Hay-drying system (2) according to one of the preceding claims,
**characterized in that** the main hose (12) has a diameter which corresponds to the height of a transversely situated hay bale (18).

7. Hay-drying system (2) according to one of the preceding claims,
**characterized in that** the secondary hoses (14) and the main hose (12) are in each case directly connected to one another by way of a plug-in connection.

8. Hay-drying system (2) according to one of the preceding claims,
**characterized in that** the air hose arrangement (10) has at least two air hoses (12, 14) which are plugged together and whose end which points to the in each case other air hose (12, 14) is in each case reinforced by a ring (30, 40) which keeps the hose cross section open, wherein the ring (30, 40) of one of the air hoses (12, 14) is plugged through the ring (40, 30) of the other air hose (14, 12).

9. Hay-drying system (2) according to Claim 8, **characterized in that** a hose overlap of the two air hoses (12, 14) between the two rings (30, 40) is constricted by a constriction means to such an extent that the plugged-in ring (30, 40) is clamped behind the construction means such that the connection of the two air hoses (12, 14) is maintained.

10. Hay-drying system (2) according to one of the preceding claims,
**characterized in that** the distributor ring (16) has, on both sides, a collar (22) which is dimensionally stable and brings about an air seal between distributor ring (16) and hay bale (18), and which is pressed into a hay bale (18) and forms into the hay bale (18) a tube which is at least 5 cm long.

11. Hay-drying system (2) according to one of the preceding claims,
**characterized in that** the air-guiding system (6) contains a suspension system having multiple suspension elements (48) which are arranged spaced apart from one another in a regular manner for the suspended retention of the air hose (44) on a horizontal support construction.

12. Method for drying hay bales (18) by means of a hay-drying system (2) to a residual moisture content of under 20%, in which air heated by a combustion furnace is blown through an air-guiding system (6) to the hay bales (18) by means of a blower (4), wherein the air is guided through a blowing-out end (38) in the form of a distributor ring (16) which is open on two sides and which guides air from the blower (4) into two hay bales (18) which are oppositely arranged relative to the distributor ring (16),
**characterized in that** the air-guiding system (6) has an air hose arrangement (10) which consists of at least one air hose (12, 14, 44), said air hose being able to be folded in lengthwise and being able to be inflated in terms of its volume, and which forms at least 70% of the air-guiding path from the blower (4) to a hay bale (18), wherein air is guided through a main hose (12) and multiple secondary hoses (14) of the air hose arrangement (10) which branch off therefrom and are smaller in cross section, which are identical to the main hose (12) in terms of their construction, are in each case connected to one of multiple branches of the main hose (12) and are in each case connected to one of the distributor rings (16).

13. Method according to Claim 12,
**characterized in that** the air hose arrangement (10) is folded in lengthwise and, for mounting on the blower (4) and in the hay bales (18), unfolded, and is inflated in terms of its volume by the blower air.

## Revendications

1. Système de séchage de foin (2) comprenant un ventilateur (4) est un système de guidage d'air (6) pour amener de l'air du ventilateur (4) à plusieurs balles de foin (18), une extrémité d'entrée (36), qui est fixée à une sortie d'air du ventilateur (4), et au moins une extrémité de sortie (38) destinée à être placée dans une balle de foin (18), l'extrémité de sortie (38) étant formée par une bague distributrice (16) ouverte des deux côtés, laquelle guide de l'air à partir du ventilateur (4) dans deux balles de foin (18) disposées de manière opposée par rapport à la bague distributrice (16),
**caractérisé en ce que** le système de guidage d'air (6) comprend un ensemble de flexibles à air (10) qui est constitué d'au moins un flexible à air (12, 14, 44) repliable en longueur et gonflable en volume, et qui forme au moins 70 % du trajet de guidage d'air de l'extrémité d'entrée (36) à l'extrémité de sortie (38), l'ensemble de flexibles à air (10) comprenant un flexible principal (12) et plusieurs flexibles secondaires (14) bifurquant à partir de celui-ci et de section transversale plus petite, lesquels flexibles secondaires sont de structure identique à celle du flexible principal (12), sont raccordés respectivement à l'une parmi plusieurs dérivations du flexible principal (12) et sont raccordés respectivement à l'une des bagues distributrice (16).

2. Système de séchage de foin (2) selon la revendication 1,
**caractérisé en ce que** le flexible à air (12, 14, 44) est un flexible en tissu revêtu de matière synthétique.

3. Système de séchage de foin (2) selon la revendication 1 ou 2,
**caractérisé en ce que** le flexible à air (12, 14, 44) comprend une structure annulaire (26) stable en section transversale vis-à-vis d'un affaissement, laquelle structure annulaire entoure plusieurs fois sa section transversale.

4. Système de séchage de foin (2) selon la revendication 3,
**caractérisé en ce que** la structure annulaire (26) est une structure hélicoïdale.

5. Système de séchage de foin (2) selon la revendication 3 ou 4,
**caractérisé en ce que** la structure annulaire (26) est entourée vers l'extérieur par un moyen de protection contre le frottement (46) qui entoure en forme de bande le flexible à air (44) dans la région de la structure annulaire (26) et recouvre vers l'extérieur un segment, situé radialement le plus à l'extérieur, du flexible à air (44).

6. Système de séchage de foin (2) selon l'une quelconque des revendications précédentes,
**caractérisé en ce que** le flexible principal (12) présente un diamètre qui correspond à la hauteur d'une balle de foin (18) située transversalement.

7. Système de séchage de foin (2) selon l'une quelconque des revendications précédentes,
**caractérisé en ce que** les flexibles secondaires (14) et le flexible principal (12) sont reliés directement les uns aux autres respectivement à l'aide d'une liaison enfichable.

8. Système de séchage de foin (2) selon l'une quelconque des revendications précédentes,
**caractérisé en ce que** l'ensemble de flexibles à air (10) comprend au moins deux flexible à air (12, 14) enfichés les uns dans les autres, dont l'extrémité tournée vers l'autre flexible à air (12, 14) respectif est renforcée respectivement par une bague (30, 40) maintenant la section transversale de flexible ouverte, la bague (30, 40) de l'un des flexibles à air (12, 14) étant enfichée à travers la bague (40, 30) de l'autre flexible à air (14, 12).

9. Système de séchage de foin (2) selon la revendication 8,
**caractérisé en ce qu'**un chevauchement des deux flexibles à air (12, 14) entre les deux bagues (30, 40) est resserré à l'aide d'un moyen de resserrement dans une mesure telle que la bague enfichée (30, 40) est serrée derrière le moyen de resserrement de manière à maintenir la liaison des deux flexibles à air (12, 14).

10. Système de séchage de foin (2) selon l'une quelconque des revendications précédentes,
**caractérisé en ce que** la bague distributrice (16) comprend des deux côtés un rebord (22) indéformable et provoquant une étanchéité à l'air entre la bague distributrice (16) et les balles de foin (18), lequel rebord est pressé dans une balle de foin (18) et forme un tube d'au moins 5 cm de long dans la balle de foin (18).

11. Système de séchage de foin (2) selon l'une quelconque des revendications précédentes,
**caractérisé en ce que** le système de guidage d'air (6) comporte un système de suspension doté de plusieurs éléments de suspension (48) qui sont espacés régulièrement les uns des autres pour supporter de manière suspendue le flexible à air (44) sur une structure de support horizontale.

12. Procédé de séchage de balles de foin (18) au moyen d'un système de séchage de foin (2) à une humidité résiduelle inférieure à 20 %, procédé selon lequel de l'air réchauffé par un four à combustion est soufflé au moyen d'un ventilateur (4) à travers un système de guidage d'air (6) jusqu'aux balles de foin (18), l'air étant guidé à travers une extrémité de sortie (38) se présentant sous la forme d'une bague distributrice (16) ouverte des deux côtés, laquelle guide de l'air à partir du ventilateur (4) dans deux balles de foin (18) disposées de manière opposée par rapport à la bague distributrice (16),
**caractérisé en ce que** le système de guidage d'air (6) comprend un ensemble de flexibles à air (10) qui est constitué d'au moins un flexible à air (12, 14, 44) repliable en longueur et gonflable en volume, et qui forme au moins 70 % du trajet de guidage d'air du ventilateur (4) à une balle de foin (18), de l'air étant guidé à travers un flexible principal (12) et plusieurs flexibles secondaires (14), bifurquant à partir de celui-ci et de section transversale plus petite, de l'ensemble de flexibles à air (10), lesquels flexibles secondaires sont de structure identique à celle du flexible principal (12), sont raccordés respectivement à l'une parmi plusieurs dérivations du flexible principal (12) et sont raccordés respectivement à l'une des bagues distributrice (16).

13. Procédé selon la revendication 12,
**caractérisé en ce que** l'ensemble de flexibles à air (10) est replié en longueur et est déplié pour le montage sur le ventilateur (4) et dans les balles de foin (18), et est gonflé en volume par l'air soufflé.
